# FASCICULE DE BREVET EUROPEEN

(11) **EP 3 330 177 B1**
(45) Date de publication et mention de la délivrance du brevet: **24.04.2019**
(21) Numéro de dépôt: 17200291.7
(22) Date de dépôt: 07.11.2017
(51) Int. Cl.: B64C 27/56, B64D 31/04

(54) **ORGANE DE COMMANDE, AERONEF A VOILURE TOURNANTE ET PROCEDE**
STEUERORGAN, DREHFLÜGELFLUGZEUG UND VERFAHREN
A CONTROL MEMBER, A ROTARY WING AIRCRAFT, AND A METHOD

(30) Priorité: 30.11.2016 FR 1601695
(43) Date de publication de la demande: 06.06.2018
(73) Titulaire: Airbus Helicopters, 13725 Marignane Cedex (FR)
(72) Inventeur: BIHEL, Jean-Romain, 13740 LE ROVE (FR); SASSI, Zouhair, 13012 MARSEILLE (FR)
(74) Mandataire: GPI & Associés

(56) Documents cités:
- FR-A- 1 518 834
- GB-A- 790 560
- US-A- 2 514 212

## Description

La présente invention concerne un organe de commande, un aéronef à voilure tournante comprenant un tel organe de commande, et un procédé appliqué par l'aéronef.

Un aéronef à voilure tournante de type hélicoptère par exemple comporte au moins un rotor principal qui participe au moins partiellement à la sustentation et à la propulsion de cet aéronef.

En outre, un système permet au moins de contrôler le mouvement en lacet de l'aéronef.

Dès lors, un tel hélicoptère comporte trois axes de pilotage. Un premier axe consiste à utiliser une première commande pour contrôler la norme du vecteur portance de l'aéronef. Un deuxième axe consiste à utiliser une deuxième commande pour commander l'orientation de ce vecteur portance, et un troisième axe consiste à utiliser une troisième commande pour commander le mouvement en lacet de l'aéronef.

Par exemple, un hélicoptère peut comprendre un rotor principal participant à sa propulsion et sa sustentation. De plus, un hélicoptère peut comprendre un rotor auxiliaire participant au moins au contrôle du mouvement en lacet.

Dès lors, l'aéronef comporte des commandes de pilotage manoeuvrables par un pilote pour contrôler les évolutions de cet aéronef.

Ainsi, un levier de pas collectif permet de contrôler collectivement le pas des pales du rotor principal pour régler la portance de l'aéronef. Un manche cyclique permet de contrôler cycliquement le pas des pales du rotor principal pour régler l'orientation du vecteur portance de l'aéronef. Enfin, un palonnier permet de régler collectivement le pas des pales du rotor auxiliaire pour contrôler le mouvement en lacet de l'hélicoptère.

Selon une autre réalisation, un hélicoptère peut comprendre deux rotors principaux, éventuellement coaxiaux.

Dès lors, un levier de pas collectif peut permettre de contrôler collectivement le pas des pales des rotors principaux pour régler la portance de l'aéronef. Un manche cyclique peut permettre de contrôler cycliquement le pas des pales des rotors principaux pour régler l'orientation du vecteur portance de l'aéronef. Enfin, un palonnier peut permettre de régler le couple en lacet exercé par au moins un rotor principal sur le fuselage de l'aéronef, afin de contrôler le mouvement en lacet de l'aéronef.

Un autre type d'aéronef à voilure tournante dit « hybride » par commodité comporte au moins un rotor qui participe au moins partiellement à la sustentation et à la propulsion de cet aéronef. De plus, l'aéronef comporte un dispositif permettant de contrôler le mouvement en lacet de l'aéronef. Cet aéronef comprend aussi un système moteur apte à exercer, au moins selon le sens d'avancement de l'aéronef, une poussée dite « poussée additionnelle » par commodité. Cette poussée additionnelle est qualifiée d'« additionnelle » dans la mesure où cette poussée est axialement indépendante de la poussée éventuellement exercée par la voilure tournante.

Outre les trois axes de pilotage usuels, un tel aéronef à voilure tournante hydride comprend un quatrième axe de pilotage. Ce quatrième axe de pilotage consiste à utiliser une quatrième commande pour piloter la norme de la poussée additionnelle.

Par exemple, un aéronef à voilure tournante hybride peut comprendre un rotor principal qui participe au moins partiellement à la sustentation et à la propulsion de cet aéronef. De plus, cet aéronef à voilure tournante hybride comporte deux systèmes moteurs munis respectivement de deux hélices participant au moins partiellement à la propulsion de l'aéronef et au contrôle du mouvement en lacet de cet aéronef.

Un levier de pas collectif peut permettre de contrôler collectivement le pas des pales du rotor principal pour régler la norme du vecteur portance de l'aéronef. Un manche cyclique peut permettre de contrôler cycliquement le pas des pales du rotor principal pour régler l'orientation du vecteur portance de l'aéronef.

En outre, une commande de poussée peut permettre à un pilote de régler collectivement un pas moyen des pales des hélices pour piloter la poussée additionnelle générée conjointement par les hélices.

De plus, un palonnier peut permettre de régler la répartition de cette poussée additionnelle entre les deux hélices pour contrôler le mouvement en lacet de l'aéronef au travers de l'application de poussées différentes à l'aide des hélices. Ce palonnier peut par exemple permettre de régler un pas différentiel, le pas des pales d'une hélice étant par exemple égal à la somme du pas moyen et de la moitié du pas différentiel, le pas des pales de l'autre hélice étant par exemple égal à la différence du pas moyen et de la moitié du pas différentiel.

La commande de poussée peut prendre la forme d'une commande de pilotage électrique « tout ou rien ». Lorsque la commande de poussée est manoeuvrée, cette commande de poussée génère un ordre d'augmentation ou de réduction du pas moyen des pales des hélices. Cet ordre est transmis à des actionneurs pour modifier le pas des pales des deux hélices de la même manière. Par exemple, un actionneur est agencé sur une chaîne de transmission mécanique contrôlant un distributeur hydraulique, ce distributeur hydraulique alimentant un vérin hydraulique apte à engendrer un mouvement des pales d'une hélice.

Les documents FR 1518834 et GB 790560 sont cités à titre illustratif uniquement car ces documents n'ont pas trait à la commande d'hélices d'un hélicoptère hybride.

Le document FR 1518834 présente une commande à levier. Ce levier est mobile. Le mouvement est guidé par un guide présentant une fente de guidage en forme de À (lambda). En outre, le levier porte une poignée tournante pilotant l'admission de carburant d'un groupe moteur.

Le document GB 790560 présente une commande d'aéronef. Cette commande comporte un tube mobile en rotation autour d'un axe de rotation transversal. Le tube est relié à une tige de contrôle du pas collectif des pales d'un rotor. Une rotation du tube induit alors une modification de ce pas collectif.

Le document US 2514212 est aussi connu.

De plus, cette commande est munie d'une tige traversant le tube. Cette tige s'étend longitudinalement d'une poignée en saillie vers l'avant du tube vers une extrémité en saillie vers l'arrière du tube. Cette extrémité est articulée à un système de mobilité pilotant la position d'une valve. La poignée peut effectuer un mouvement rotatif par rapport au tube autour d'un axe longitudinal entre une première position et une deuxième position.

Lorsque la poignée se trouve dans la première position, une rotation du tube autour de son axe de rotation transversal induit uniquement une modification du pas collectif des pales du rotor. Par contre, lorsque la poignée se trouve dans la deuxième position, une rotation du tube autour de son axe de rotation transversal induit une modification du pas collectif des pales du rotor et de la position de la valve contrôlée par la poignée.

Par suite, les documents FR 1518834 et GB 790560 présentent des commandes munies de poignées tournantes uniquement.

La présente invention a alors pour objet de proposer un organe de commande innovant manoeuvrable par un pilote et pouvant notamment être utilisé pour piloter une poussée d'un aéronef.

L'invention vise ainsi un organe de commande manoeuvrable par un pilote, cet organe de commande étant destiné à piloter un système moteur exerçant une poussée dans un aéronef, l'organe de commande comportant un manche et un ensemble mobile agencé sur le manche et mobile par rapport à ce manche, l'ensemble mobile comprenant une poignée.

Un tel système moteur peut par exemple prendre la forme d'un réacteur ou encore d'une hélice.

La poignée est liée au manche par une liaison hélicoïdale afin qu'une rotation de la poignée autour du manche génère une translation de la poignée et de l'ensemble mobile le long du manche, la poignée étant mobile en translation selon un premier sens de translation par exemple destiné à imposer une augmentation de la poussée, la poignée étant mobile en translation selon un deuxième sens de translation opposé au premier sens de translation et par exemple destiné à imposer une diminution de ladite poussée.

Par commodité, la poussée est considérée par la suite comme étant positive lorsque cette poussée permet de faire avancer l'aéronef, selon un sens d'avancement allant de la queue vers le nez de l'aéronef, et négative dans le cas contraire.

Le terme « augmentation » fait référence à une augmentation de la poussée. Une telle augmentation peut notamment permettre d'inverser le sens de la poussée en transformant une poussée négative en poussée positive. Une augmentation de la poussée peut revenir à imposer une accélération de l'aéronef selon le sens d'avancement.

Le terme « diminution » fait référence à une diminution de la poussée. Une telle diminution peut notamment permettre d'inverser le sens de la poussée en transformant une poussée positive en poussée négative. Une diminution de la poussée peut revenir à imposer une décélération de l'aéronef selon le sens d'avancement.

Dès lors, l'ensemble mobile de l'organe de commande présente une poignée en liaison hélicoïdale sur le manche. Une telle poignée peut prendre la forme d'un cylindre qui entoure localement un tube du manche.

Dès lors, l'organe de commande ne comporte pas une poignée mobile uniquement en rotation, contrairement au document FR 1518834 par exemple, ou uniquement mobile en translation. La poignée réalise un mouvement de rotation-translation de part la liaison hélicoïdale. Au fur et à mesure que la poignée est tournée autour du manche, cette poignée est déplacée en translation.

Ainsi, un pilote peut déplacer intuitivement la poignée pour augmenter ou réduire la poussée exercée par chaque système moteur commandé par l'organe de commande.

En outre, un pilote se saisissant de la poignée d'une main peut exercer un effort important sur une transmission mécanique reliée à l'ensemble mobile. En effet, l'effort total exercé par le pilote sur la transmission mécanique résulte d'une combinaison d'un effort développé en rotation par sa main pour tourner la poignée et d'un effort développé en translation exercé par le bras du pilote. Une telle combinaison d'effort ne peut pas être atteinte avec une poignée usuelle, et peut s'avérer avantageuse pour déplacer des éléments nécessitant des efforts de commande importants.

De plus, une poignée à liaison hélicoïdale peut être positionnée précisément par un pilote par rapport au manche, contrairement à une poignée mobile uniquement en translation.

Enfin, le moyen de commande matérialisé par l'ensemble mobile de l'organe de commande est purement mécanique. Son fonctionnement se matérialise par l'actionnement rotatif d'une poignée, qui génère une action de translation de l'ensemble mobile comprenant cette même poignée. Cet ensemble mobile est monté sur le manche, par exemple un manche contrôlant le pas collectif d'un rotor principal, et son fonctionnement peut ne pas influencer la commande générée par le manche en tant que tel.

De par sa structure et pour les raisons évoquées précédemment, cet organe de commande peut tendre à être robuste, ergonomique, pratique, et à être utilisé de manière intuitive.

Cet organe de commande peut ainsi être utilisé sur un hélicoptère hybride pour piloter la poussée exercée collectivement par les hélices. Dans ce cas, la poignée peut par exemple permettre la gestion de secours de la poussée exercée par les hélices. La rotation de la poignée génère, grâce à un montage hélicoïdal, un déplacement longitudinal de la poignée sur le manche afin d'aider le pilote à appréhender le sens de la variation de poussée (accélération vers l'avant, décélération vers l'arrière). Eventuellement, le mouvement de rotation de la poignée peut de surcroit être indexé sur le mouvement d'une aiguille d'un indicateur à aiguille de poussée du tableau de bord.

L'organe de commande peut de plus comporter une ou plusieurs des caractéristiques qui suivent.

Ainsi, l'organe de commande peut comporter une transmission mécanique de mouvement, ladite transmission mécanique de mouvement comprenant au moins un lien mobile fixé mécaniquement à l'ensemble mobile.

L'expression « transmission mécanique de mouvement » désigne un système mécanique muni d'au moins un lien pouvant être déplacé au moins partiellement de manière linéaire. Une telle transmission peut par exemple comprendre au moins une commande à billes présentant une lame mobile en translation, une commande à câble présentant un câble mobile en translation, une bielle...

La transmission mécanique de mouvement s'étend alors d'une portion d'entrée comprenant un lien lié à l'ensemble mobile vers une portion de sortie. Par exemple, un unique lien s'étend de la portion d'entrée à la portion de sortie. La translation de l'ensemble mobile suite à la rotation de la poignée génère une translation identique de la portion d'entrée puis un mouvement de la portion de sortie. Par exemple, la portion de sortie effectue une translation de même amplitude et/ou de même sens que la portion d'entrée et l'ensemble mobile.

Un ordre de déplacement est ainsi généré purement mécaniquement.

Selon un autre aspect, l'ensemble mobile peut comporter un socle qui coopère avec la poignée, la poignée étant articulée au socle par une liaison pivot conférant un degré de liberté en rotation à la poignée par rapport au socle et autour du manche, le socle étant monté sur le manche par une liaison glissière, la poignée étant mobile en rotation par rapport au socle et étant solidaire en translation du socle, le socle étant uniquement mobile en translation par rapport au manche.

Eventuellement, la transmission mécanique de mouvement est fixée au socle.

L'utilisation d'une poignée et d'un socle attaché à une transmission mécanique de mouvement, permet de ne déplacer la portion d'entrée de la transmission mécanique liée au socle qu'en translation.

Selon un autre aspect, l'ensemble mobile peut être destiné à commander un actionneur de commande nécessitant un déplacement de cet ensemble mobile sur une amplitude de commande pour couvrir toute une plage de fonctionnement de cet actionneur de pilotage. Hors fonctionnement, l'ensemble mobile est dans une position centrée entre une première butée et une deuxième butée, la première butée et la deuxième butée étant atteintes par l'ensemble mobile à partir de la position centrée suite à un mouvement translatif de l'ensemble mobile selon ladite amplitude de commande.

La poignée peut être un système de commande de secours. Ainsi, la poignée peut être rendue inopérante dans certaines phases de fonctionnement, par exemple en dehors d'un cas de panne d'une interface de commande principale pilotant l'actionneur de commande ou en dehors de phases d'entraînement.

Ce dispositif permet alors de s'assurer que l'ensemble mobile peut piloter l'actionneur de commande sur toute la plage de fonctionnement de cet actionneur de commande, quel que soit l'état de l'actionneur de commande lorsque la poignée est rendue opérante.

Par exemple, la poignée est libre en rotation sur une amplitude maximale de plus ou moins 270 degrés qui engendre une translation de l'ensemble mobile de plus ou moins 75 millimètres au regard de la position centrée et d'un sens de déplacement positif prédéterminé. Autrement dit et à partir de la position centrée, une rotation de la poignée de 270 degrés selon un premier sens de rotation induit une translation de 75 millimètres selon le premier sens de translation. De même, et à partir de la position centrée, une rotation de la poignée de 270 degrés selon un deuxième sens de rotation induit une translation de 75 millimètres selon le deuxième sens de translation.

La capacité de déplacement maximale de l'ensemble mobile est alors de 150 millimètres, soit le double de la course totale utile prévue pour l'actionneur de commande.

A titre illustratif, l'effort de poussé développé par le pilote est de l'ordre de 10 daN (décanewton) en sortie de poignée.

Selon un autre aspect, le manche peut s'étendre longitudinalement d'une extrémité proximale à une extrémité libre, l'extrémité proximale étant munie d'une articulation conférant au manche un degré de liberté en rotation autour d'un axe de rotation.

Le premier sens de translation peut aller de l'extrémité proximale à l'extrémité libre.

En particulier, le premier sens est parallèle le cas échéant avec le sens d'avancement vers l'avant de l'aéronef.

Le fonctionnement de la commande est alors intuitif car le déplacement de l'ensemble mobile vers l'avant du manche implique une variation de la poussée longitudinale vers l'avant (accélération) de l'aéronef. A l'inverse, un actionnement de la poignée vers l'arrière implique une variation de la poussée longitudinale vers l'arrière (décélération).

Selon un autre aspect, la poignée peut être agencée entre la ladite extrémité proximale et ladite extrémité libre, la poignée étant indépendante du manche pour qu'une rotation du manche autour de son axe de rotation n'induise pas un déplacement de la poignée le long du manche.

Outre un organe de commande, l'invention vise aussi un aéronef. Cet aéronef est muni d'au moins un système moteur exerçant une poussée, la poussée étant réglée par au moins un actionneur de commande, l'actionneur de commande étant piloté par une chaîne de transmission d'un mouvement débouchant sur l'actionneur de commande. L'aéronef comporte alors au moins un organe de commande selon l'invention, cet organe de commande étant relié mécaniquement à la chaîne de transmission d'un mouvement et étant destiné à déplacer la chaîne de transmission d'un mouvement.

Par ailleurs, la chaîne de transmission d'un mouvement peut comporter au moins un actionneur de pilotage, cet actionneur de pilotage étant piloté par une interface de commande avionique sollicitée par un pilote.

Le terme « interface de commande » désigne un organe activé par un pilote, tel que par exemple un bouton ou équivalent, un écran tactile, une commande vocale...

Le terme « avionique » signifie que l'interface de commande génère un signal électrique, électrique, numérique, ou optique pour piloter un changement d'état de l'actionneur, à savoir le déplacement relatif de deux pièces de cet actionneur. Par exemple, l'organe de commande requiert l'extension ou la rétraction de l'actionneur dans le cadre d'un actionneur linéaire, une rotation d'une tige dans le cadre d'un actionneur rotatif, ou une déformation dans le cadre d'un actionneur piézoélectrique.

Cette interface de commande peut être un système principal utilisé par défaut.

A l'inverse, l'organe de commande ne requiert pas un changement d'état de l'actionneur de pilotage, mais déplace cet actionneur de pilotage mécaniquement. L'organe de commande peut être un moyen de secours utilisé en cas de panne de l'interface de commande ou durant des phases d'entraînement.

Selon un autre aspect, l'aéronef pouvant comprendre deux systèmes moteurs à hélices, la poussée exercée par chaque hélice d'un système moteur étant pilotée en modifiant un pas des pales de cette hélice, l'aéronef peut comporter un système de commande manoeuvrable par un pilote pour modifier les poussées exercées par les deux hélices de manière différente, l'organe de commande permettant de modifier les poussées exercées par les deux hélices de la même manière, la chaîne de transmission d'un mouvement comportant au moins un combinateur relié à l'organe de commande et au système de commande ainsi qu'aux deux hélices, le combinateur combinant mécaniquement un déplacement généré par l'organe de commande et un déplacement généré par le système de commande.

Le combinateur peut être d'un type connu. Par exemple, l'enseignement du document FR 3027871 est applicable.

Selon un autre aspect, l'organe de commande pouvant comprendre une transmission mécanique de mouvement solidaire en translation de l'ensemble mobile, un levier peut être articulé d'une part à la transmission mécanique de mouvement et d'autre part à la chaîne de transmission d'un mouvement, ledit levier étant mobile en rotation autour d'un axe d'articulation.

Un simple levier permet de servir d'interface entre les deux sous-systèmes, ce qui s'avère simple à mettre en oeuvre.

L'aéronef peut comporter plusieurs organes de commande comprenant chacun une transmission mécanique de mouvement reliée à l'ensemble mobile de l'organe de commande associé, chaque transmission mécanique de mouvement étant articulée au levier.

Par exemple, une commande pilote et une commande copilote sont du type de l'organe de commande selon l'invention. Les ensembles mobiles des deux organes de commande sont alors reliés à un même levier. La conjugaison des ordres entre ces deux organes de commande se fait ainsi naturellement par ce levier commun.

Selon un autre aspect, l'axe d'articulation pouvant s'étendre entre deux zones extrémales du levier, la transmission mécanique de mouvement et la chaîne de transmission d'un mouvement peuvent être articulées au levier entre l'axe d'articulation et la même zone extrémale.

Le levier ne génère éventuellement pas un changement de direction d'un mouvement.

Selon un autre aspect, l'aéronef peut comporter un système d'immobilisation manoeuvrable par un pilote pour immobiliser le levier en fonctionnement normal, à savoir par exemple tant que l'actionneur de commande peut être piloté sans manoeuvrer la poignée de l'organe de commande.

En fonctionnement normal et donc nominal, le levier est verrouillé dans une position. Le cas échéant, le levier sert de point d'ancrage d'un actionneur de pilotage piloté électriquement. Par contre, le levier est déverrouillé si nécessaire pour permettre le pilotage de l'actionneur de commande par l'ensemble mobile d'un organe commande selon l'invention.

Le système d'immobilisation peut être muni d'un système mécanique qui comprend un doigt de blocage mobile en translation et un orifice du levier, le doigt de blocage étant engagé dans ledit orifice pour interdire une rotation du levier en fonctionnement normal et étant désengagé de cet orifice pour autoriser une rotation du levier en fonctionnement manuel.

Le doigt peut être solidaire en translation d'un moyen de préhension pour pouvoir être manoeuvré par un pilote.

L'invention vise aussi un procédé pour commander un système moteur d'un aéronef selon cette invention.

Selon ce procédé, on tourne la poignée selon un premier sens de rotation pour la faire translater le long du manche selon le premier sens de translation afin d'augmenter la poussée exercée par le système moteur, et on tourne la poignée selon un deuxième sens de rotation pour la faire translater le long du manche selon le deuxième sens de translation afin de réduire la poussée exercée par le système moteur.

Eventuellement, l'aéronef pouvant avoir un indicateur présentant une échelle illustrant des valeurs de poussée et une aiguille pointant sur cette échelle une valeur d'une poussée courante, ladite aiguille effectuant une rotation selon un premier sens de déplacement lorsque la poussée augmente et selon un deuxième sens de déplacement lorsque la poussée diminue, ledit premier sens de rotation est identique audit premier sens de déplacement, ledit deuxième sens de rotation est identique audit deuxième sens de déplacement.

La manoeuvre de la poignée peut être intuitive de multiples manières.

En effet, la poignée peut se déplacer longitudinalement de manière homogène à l'ordre de poussée donné comme indiqué précédemment.

De manière complémentaire ou alternative, la poignée peut se déplacer en rotation de manière homogène au déplacement de l'aiguille illustrant cette poussée sur un indicateur.

Par exemple, une rotation de la poignée selon un sens dextrorsum peut induire un déplacement de l'aiguille selon ce même sens dextrorsum.

L'invention et ses avantages apparaîtront avec plus de détails dans le cadre de la description qui suit avec des exemples donnés à titre illustratif en référence aux figures annexées qui représentent :
- les figures 1 et 2, des schémas illustrant un organe de commande selon l'invention, et
- la figure 3, un schéma illustrant un organe de commande ayant un fonctionnement homogène au fonctionnement d'un indicateur de poussée,
- la figure 4, une vue d'un aéronef selon l'invention,
- les figures 5 et 6, des schémas illustrant une architecture de contrôle de systèmes moteurs dudit aéronef.

Les éléments présents dans plusieurs figures distinctes sont affectés d'une seule et même référence.

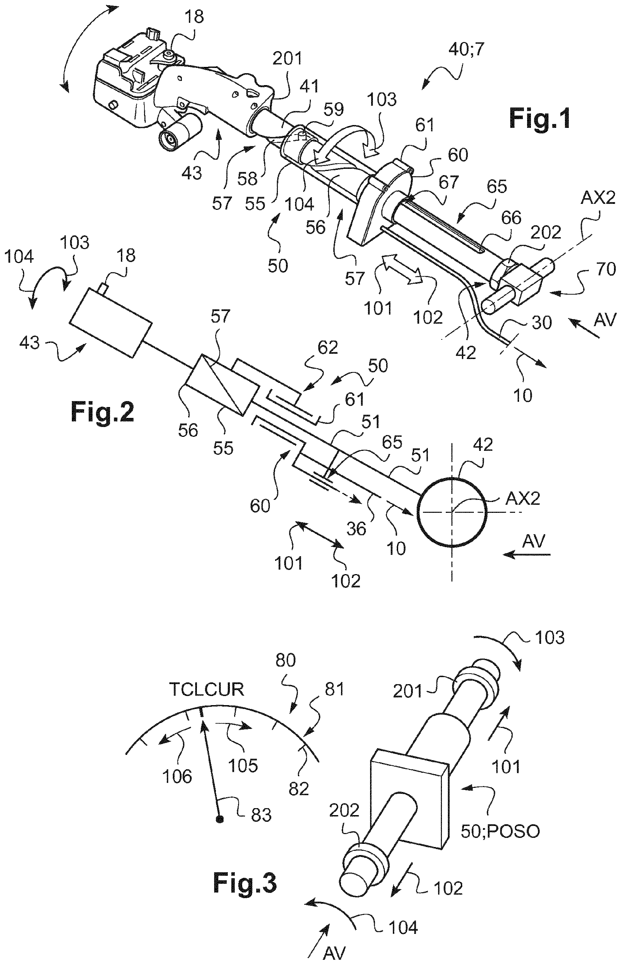

La figure 1 présente un organe de commande 40 selon l'invention en trois dimensions, et la figure 2 représente cinématiquement l'organe de commande 40. Cet organe de commande 40 est destiné à piloter un système moteur 10 exerçant une poussée, par exemple dans un aéronef 1.

En référence à la figure 1, l'organe de commande 40 comporte un manche 41. Ce manche 41 s'étend d'une extrémité dite « extrémité proximale 42 » vers une extrémité dite « extrémité libre 43 ». L'extrémité proximale 42 peut être articulée à un plancher par une articulation 70. Cette articulation 70 peut conférer au manche 41 un degré de liberté en rotation uniquement autour d'un axe de rotation AX2. Ainsi, le manche 41 peut représenter un levier de pas collectif, la rotation du manche commandant selon des méthodes connues une modification d'un pas collectif de pales d'un rotor. Un levier de pas collectif est dénommé par la suite « manette de pas collectif » pour ne pas être confondu avec un levier d'interface selon l'invention.

En outre, l'extrémité libre 43 peut porter divers boutons de commande. En particulier, cette extrémité libre 43 peut porter une interface de commande 18 avionique pilotant ladite poussée dans des conditions normales.

Par ailleurs, l'organe de commande présente une commande mécanique supplémentaire agencée sur le manche. Cette commande prend la forme d'un ensemble mobile 50 qui est agencé sur le manche 41 et mobile en translation le long de ce manche 41.

L'ensemble mobile 50 comprend une poignée 55. Une telle poignée 55 peut prendre la forme d'un cylindre entourant le manche.

Cette poignée 55 est liée au manche 41 par une liaison hélicoïdale 57.

Une telle liaison hélicoïdale 57 peut comporter au moins deux organes de guidage incluant un rail en hélice 58 présentant un pas de vis prédéterminé et un pion 59 coulissant dans le rail en hélice 58. Un desdits deux organes de guidage est alors solidaire du manche 41 et l'autre organe de guidage est solidaire de la poignée 55. Par exemple, un rail en hélice 58 est creusé dans une surface du manche 41 et un pion 59 saille d'une surface interne de la poignée 55 pour être agencé dans le rail en hélice 58. Alternativement, un rail en hélice 58 est creusé dans une surface interne de la poignée, et un pion 59 saille de la surface du manche pour être agencé dans le rail en hélice de la poignée.

Dès lors, une rotation de la poignée 55 autour d'un axe d'extension du manche 41 génère une translation de la poignée 55 et de l'ensemble mobile 50 le long de cet axe d'extension. Un tel axe d'extension peut représenter un axe de symétrie du tronçon du manche le long duquel se déplace l'ensemble mobile.

De plus, la poignée 55 est indépendante du manche 41. Une rotation du manche autour de son axe de rotation AX2 n'induit donc pas un mouvement de la poignée 55 et de l'ensemble mobile 50 par rapport au manche 41.

Par ailleurs, l'organe de commande 40 présenté comporte une transmission mécanique de mouvement 36. Cette transmission mécanique de mouvement 36 est fixée mécaniquement à l'ensemble mobile 50 pour transférer un ordre donné par l'ensemble mobile au travers d'un déplacement.

Pour faciliter l'agencement de la transmission mécanique de mouvement, l'ensemble mobile 50 peut comporter un socle 60 qui coopère avec la poignée 55. La poignée 55 est alors reliée au socle 60 par une liaison pivot 62 qui confère un degré de liberté en rotation à la poignée 55 par rapport au socle 60.

Par exemple, le socle prend la forme d'un boitier 61 dans lequel est disposée une extrémité de la poignée. Cette extrémité peut uniquement effectuer une rotation autour de l'axe d'extension par rapport au boitier 61, aux jeux de fonctionnement près.

En outre, le socle 60 est fixé sur le manche 41 par une liaison glissière 65. La liaison glissière 65 peut comporter deux moyens de guidage incluant un rail longiligne 66 et un pion 67 coulissant dans le rail longiligne 66, un des deux moyens de guidage étant solidaire du manche 41 et l'autre organe de guidage étant solidaire du socle 60. Par exemple, un rail longiligne 66 est creusé dans le manche 41 et un pion 67 est fixé au socle 60 pour coulisser dans le rail longiligne 66. Le rail longiligne 66 peut être disposé à la suite du rail en hélice 58 le cas échéant.

Dès lors, la poignée 55 est mobile en rotation par rapport au socle 60. Par contre, la poignée 55 et le socle 60 sont solidaires en translation le long du manche 41.

Par suite, un lien de la transmission mécanique de mouvement 36 est avantageusement fixé au socle 60, pour ne pas subir le mouvement rotatif de la poignée 55 et se déplacer uniquement en translation.

Dès lors, une rotation de la poignée 55 selon un premier sens de rotation 103 peut induire un déplacement en translation de l'ensemble mobile 50 selon un premier sens de translation 101, pour par exemple requérir une augmentation de la poussée exercée par les systèmes moteurs commandés. A l'inverse, une rotation de la poignée 55 selon un deuxième sens de rotation 104 opposé au premier sens de rotation 103 peut induire un déplacement en translation de l'ensemble mobile 50 selon un deuxième sens de translation 102 opposé au premier sens de translation, pour par exemple requérir une diminution de ladite poussée.

Le premier sens de translation 101 peut être dirigé sensiblement selon le sens d'avancement AV d'un aéronef et de l'extrémité proximale 42 vers l'extrémité libre 43. L'expression « sensiblement selon le sens d'avancement AV » signifie que le sens de translation est parallèle à un plan vertical passant par le sens d'avancement, et perpendiculaire à l'axe de tangage de l'aéronef par exemple.

Par ailleurs et en référence à la figure 3, le premier sens de rotation et le deuxième sens de rotation peuvent être homogènes au fonctionnement d'un indicateur 80.

En effet, l'aéronef peut comprendre un indicateur 80 qui présente une échelle 81 illustrant des valeurs de poussée. De plus, l'indicateur 80 possède une aiguille 83 mobile en rotation qui pointe sur cette échelle une valeur d'une poussée courante, à savoir la poussée développée par les systèmes moteurs. Cette aiguille 83 effectue une rotation selon un premier sens de déplacement 105 lorsque la poussée augmente, et selon un deuxième sens de déplacement 106 lorsque la poussée diminue. Le deuxième sens de déplacement 106 est opposé au premier sens de déplacement 105.

Dès lors et selon le procédé appliqué, un pilote peut tourner la poignée 55 selon le premier sens de rotation 103 pour la faire translater le long du manche 41 selon le premier sens de translation 101 afin d'augmenter la poussée exercée par les systèmes moteur 10 contrôlés, et fait tourner la poignée 55 selon le deuxième sens de rotation 104 pour la faire translater le long du manche selon le deuxième sens de translation 102 afin de réduire la poussée exercée par les systèmes moteur 10 contrôlés.

Plus précisément, le premier sens de rotation 103 peut être identique au premier sens de déplacement 105, et le deuxième sens de rotation 104 est identique au deuxième sens de déplacement 106.

La manoeuvre de l'ensemble mobile est ainsi fortement intuitive.

Par ailleurs, l'ensemble mobile peut être déplacé entre deux postions extrêmes, et par exemple entre une première butée 201 et une deuxième butée 202.

Lorsque l'ensemble mobile est rendu inopérant par exemple, ledit ensemble mobile 50 peut être dans une position dite « position centrée POS0 » non visible sur la figure 1. Dans cette position centrée, l'ensemble mobile 50 se trouve à égale distance de la première butée 201 et la deuxième butée 202.

Si cet ensemble mobile 50 est destiné à commander au moins un actionneur de commande 14 nécessitant un déplacement de l'ensemble mobile 50 sur une amplitude de commande prédéterminée pour couvrir toute la plage de fonctionnement de cet actionneur de commande 14, ladite distance est égale à ladite amplitude de commande. A partir de la position centrée POS0, la première butée 201 ou la deuxième butée 202 sont atteintes par l'ensemble mobile 50 suite à un mouvement translatif de l'ensemble mobile selon ladite amplitude de commande.

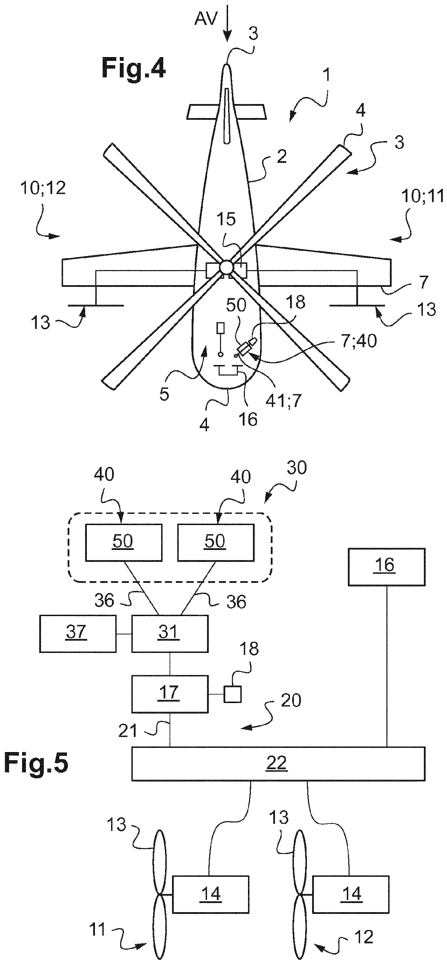

La figure 4 présente un aéronef 1 selon l'invention. Cet aéronef 1 est muni d'au moins un organe de commande 40 pour commander au moins un système moteur 10. Ce système moteur exerce une poussée permettant de déplacer l'aéronef 1.

Cet aéronef 1 comprend un fuselage 2 qui s'étend longitudinalement selon un sens d'avancement AV de l'aéronef d'une queue 3 vers un nez 4.

L'aéronef 1 peut être un giravion. Dès lors, l'aéronef peut comprendre au moins un rotor 3 qui participe au moins partiellement à la sustentation de l'aéronef voire à sa propulsion. Un tel rotor 3 peut être porté par le fuselage 2. Ce rotor comporte une pluralité de pales à pas variable.

Par ailleurs, cet aéronef comprend aussi au moins un système moteur apte à exercer, au moins selon le sens d'avancement de l'aéronef, une poussée. Par exemple, l'aéronef 1 comporte deux systèmes moteurs 10 pourvus respectivement de deux hélices 11, 12. Les deux hélices 11, 12 peuvent être agencées transversalement de part et d'autre du fuselage et portées par une aile 7.

Chaque hélice 11, 12 comporte une pluralité de pales 13 à pas variable.

Les hélices 11, 12 et le rotor 3 peuvent être mis en mouvement par une installation motrice 15 usuelle. Une telle installation motrice peut comprendre au moins un moteur ainsi que diverses boîtes de transmission de puissance par exemple.

Pour être pilotable par un pilote, l'aéronef comporte une commande cyclique 5 manoeuvrable par un pilote pour contrôler cycliquement de manière usuelle le pas des pales du rotor 3. La commande cyclique 5 peut prendre la forme d'un manche cyclique usuel par exemple.

De plus, l'aéronef comporte une commande collective 7 manoeuvrable par un pilote pour contrôler collectivement de manière usuelle le pas des pales du rotor 3. La commande collective peut prendre la forme d'une manette de pas collectif par exemple.

La commande collective et l'organe de commande 40 peuvent former un seul et même équipement.

En outre, une interface de commande 18 avionique peut permettre à un pilote de régler collectivement la poussée exercée par les hélices, par exemple en réglant un pas moyen des pales des hélices. Dès lors, un système de commande 16, éventuellement un palonnier, peut par exemple permettre de régler un pas différentiel, le pas des pales d'une hélice étant par exemple égal à la somme du pas moyen et de la moitié du pas différentiel, le pas des pales de l'autre hélice étant par exemple égal à la différence du pas moyen et de la moitié du pas différentiel.

Dans ce cadre, l'organe de commande 40 selon l'invention peut alors représenter un système de secours permettant de piloter le pas moyen en cas de défaillances de l'interface de commande avionique 18 ou lors d'entraînements au pilotage par exemple. La commande collective 7 peut alors comprendre le manche 41 de l'organe de commande 40. L'interface de commande avionique peut être portée par ce manche 41.

Néanmoins, l'organe de commande 40 selon l'invention peut aussi être agencé sur d'autres types d'aéronef, par exemple pour piloter la poussée d'un réacteur.

La figure 5 illustre de manière schématique une architecture de pilotage sur un aéronef du type de la figure 4.

Selon cette architecture, le pas des pales 13 de chaque hélice peut être modifié. Ainsi, l'aéronef comporte pour chaque hélice un actionneur dénommé par commodité « actionneur de commande 14 » qui modifie le pas des pales associées sur commande.

Les actionneurs de commande 14 sont pilotés par une chaine de commande usuelle dénommée « chaine de transmission d'un mouvement 20 » par commodité. Cette chaine de transmission d'un mouvement peut être pilotée par le système de commande 16 et l'interface de commande 18.

Cette interface de commande 18 peut être une commande avionique générant un signal transmis à au moins un actionneur 17 de la chaine de transmission d'un mouvement. Un tel actionneur est dénommé « actionneur de pilotage » par commodité.

Dès lors, les actionneurs de pilotage et le palonnier sont reliés mécaniquement à un combinateur 22, ce combinateur 22 étant relié à chaque actionneur de commande 14. Ce combinateur 22 peut prendre la forme d'un combinateur usuel.

Par ailleurs, cette architecture présente un système de secours mécanique utilisable notamment en cas de panne de l'interface de commande 18.

Ce système de secours inclut au moins un organe de commande 40 selon l'invention. La figure 5 illustre la présence possible d'un organe de commande 40 manoeuvrable par un pilote et d'un organe de commande 40 manoeuvrable par un copilote.

Chaque organe de commande 40 comporte un ensemble mobile 50 qui est mobile en translation et relié mécaniquement par une transmission mécanique de mouvement 36 à un unique levier 31. Ce levier 31 est ainsi articulé d'une part à chaque transmission mécanique de mouvement 36 et d'autre part à la chaîne de transmission d'un mouvement 20.

En outre, le levier coopère avec un système d'immobilisation 37 qui rend inopérant le levier 31 sur requête.

Lorsque le levier est inopérant dans des conditions normales de fonctionnement, le levier sert de point d'ancrage des actionneurs de pilotage 17. Un changement d'état des actionneurs de pilotage 17 induit de fait un mouvement du combinateur. L'organe de commande ne pilote alors pas les actionneurs de commande. Les ensembles mobiles de chaque organe de commande sont immobiles dans leurs référentiels.

Par contre, lorsque le système d'immobilisation 37 libère le levier 31, une translation d'un ensemble mobile 50 induit un mouvement du combinateur 22.

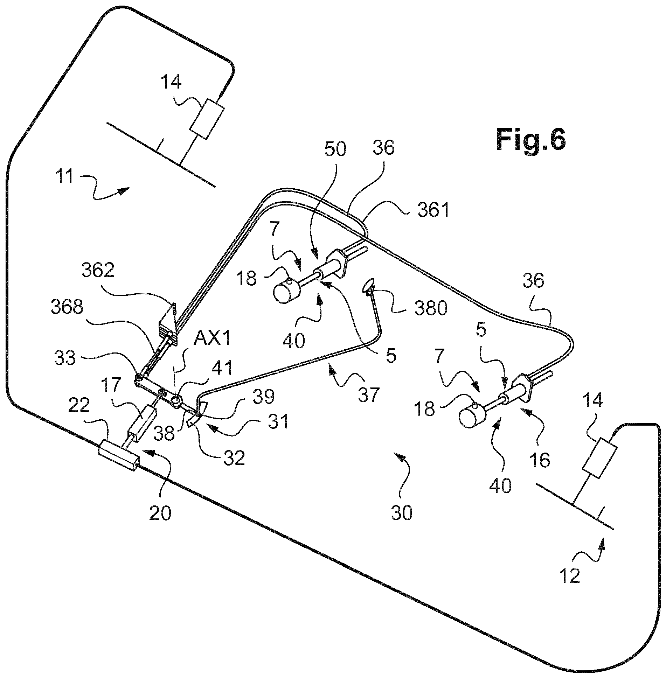

La figure 6 présente les divers organes de l'architecture de la figure 2.

Selon la figure 6, chaque ensemble mobile 50 des organes de commande 40 est relié à un levier 31 commun par une transmission mécanique de mouvement 36. Une telle transmission mécanique peut comprendre une gaine 361 en appui contre un support 362. De plus, la transmission mécanique de mouvement 36 peut comporter un câble ou une lame traversant la gaine pour être fixé(e) à l'ensemble mobile 50 et au levier 31.

Par ailleurs, le levier 31 est articulé à un organe immobile de l'aéronef par une articulation qui confère au levier 31 un degré de liberté en rotation autour d'un axe d'articulation AX1. Le levier s'étendant selon la longueur entre deux zones extrémales 32, 33, l'axe d'articulation AX1 est positionné entre ces zones extrémales 32, 33.

Dès lors, chaque transmission mécanique de mouvement 36 est éventuellement articulée au levier 31 entre l'axe d'articulation AX1 et une zone extrémale particulière.

Par ailleurs, un système d'immobilisation 37 éventuel permet d'immobiliser sur requête le levier 31. Ce système d'immobilisation 37 peut comporter une tige dont une extrémité représente un doigt de blocage 38. Ce doigt de blocage 38 peut être inséré dans un orifice 39 du levier 31 pour empêcher une rotation du levier 31 autour de son axe d'articulation AX1. La tige peut aussi comprendre un moyen de préhension 380. Dès lors, un pilote peut se saisir du moyen de préhension 380 pour sortir le doigt de blocage de l'orifice 39 afin de libérer le levier 31.

Selon un autre aspect, la chaîne de transmission d'un mouvement 20 est articulée au levier 31 entre cet axe d'articulation AX1 et cette même zone extrémale particulière. Lorsque le levier 31 est immobilisé par le doigt de blocage 38, ce levier sert ainsi de point d'ancrage de la chaîne de transmission d'un mouvement.

Conformément à la réalisation présentée sur la figure 6, cette chaîne de transmission d'un mouvement 20 comporte au moins un actionneur de pilotage 17 piloté par une interface de commande 18 voire par un système de pilotage automatique. De plus, cette chaîne de transmission d'un mouvement 20 peut comporter des bielles, des moyens de renvoi, un combinateur 22... Ce combinateur 22 peut être relié par des commandes à billes, voire par des bielles aux actionneurs de commande 14. Le chaîne de transmission d'un mouvement 20 est représenté de manière schématique.

Dès lors, lorsque le système d'immobilisation immobilise le levier 31, les actionneurs de pilotage 17 sont pilotés pour changer d'état et transmettre un ordre en déplacement par une commande mécanique reliée à chaque actionneur de commande 14. Le levier 31 isole alors la chaine de transmission d'un mouvement des organes de commande 40.

Lorsqu'un pilote libère le levier 31 en sollicitant le système d'immobilisation 37, un déplacement d'un ensemble mobile 50 induit un déplacement d'au moins un lien d'une transmission mécanique de mouvement 36, une rotation du levier 31, puis un déplacement d'organes de la chaine de transmission d'un mouvement 20, et enfin d'une entrée des actionneurs de commande 14.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Organe de commande (40) manoeuvrable par un pilote, ledit organe de commande (40) étant destiné à piloter un système moteur (10) exerçant une poussée dans un aéronef (1), ledit organe de commande (40) comportant un manche (41) et un ensemble mobile (50), l'ensemble mobile (50) étant agencé sur le manche (41) et étant mobile par rapport à ce manche (41), ledit ensemble mobile (50) comprenant une poignée (55),
**caractérisé en ce que** ladite poignée (55) est liée au manche (41) par une liaison hélicoïdale (57) afin qu'une rotation de la poignée (55) autour du manche (41) génère une translation de la poignée (55) et de l'ensemble mobile (50) le long du manche (41), ladite poignée (55) étant mobile selon une dite translation suivant un premier sens (101) de translation, ladite poignée (55) étant mobile selon une dite translation suivant un deuxième sens (102) de translation opposé au premier sens (101) de translation.

2. Organe de commande selon la revendication 1,
**caractérisé en ce que** ledit organe de commande (40) comporte une transmission mécanique de mouvement (36), ladite transmission mécanique de mouvement comprenant au moins un lien mobile fixé mécaniquement à l'ensemble mobile (50).

3. Organe de commande selon la revendication 2,
**caractérisé en ce que** ledit ensemble mobile (50) comporte un socle (60) qui coopère avec ladite poignée (55), ladite poignée (55) étant articulée au socle (60) par une liaison pivot (62) conférant un degré de liberté en rotation à la poignée (55) par rapport au socle (60) et autour du manche, ledit socle (60) étant monté sur le manche (41) par une liaison glissière (65), ledit socle (60) étant uniquement mobile en translation par rapport au manche (41), la poignée (55) étant mobile en rotation par rapport au socle (60) et étant solidaire en translation du socle (60), ladite transmission mécanique de mouvement (36) étant fixée audit socle (60).

4. Organe de commande selon l'une quelconque des revendications 1 à 3,
**caractérisé en ce que** ledit ensemble mobile (50) commandant un actionneur de commande (14) nécessitant un déplacement de l'ensemble mobile (50) sur une amplitude de commande pour couvrir toute une plage de fonctionnement de cet actionneur de commande (14), hors fonctionnement ledit ensemble mobile (50) est dans une position centrée (POSO) entre une première butée (201) et une deuxième butée (202), la première butée (201) et la deuxième butée (202) étant atteintes par ledit ensemble mobile (50) à partir de la position centrée (POSO) suite à un mouvement translatif de l'ensemble mobile selon ladite amplitude de commande.

5. Organe de commande selon l'une quelconque des revendications 1 à 4,
**caractérisé en ce que** ledit manche (41) s'étendant longitudinalement d'une extrémité proximale (42) à une extrémité libre (43), ladite extrémité proximale (42) étant munie d'une articulation (70) conférant au manche un degré de liberté en rotation autour d'un axe de rotation (AX2), ledit premier sens de translation (101) va de l'extrémité proximale (42) à l'extrémité libre (43).

6. Organe de commande selon l'une quelconque des revendications 1 à 5,
**caractérisé en ce que** ledit manche (41) s'étendant longitudinalement d'une extrémité proximale (42) à une extrémité libre (43), ladite extrémité proximale (42) étant munie d'une articulation conférant au manche un degré de liberté en rotation autour d'un axe de rotation (AX2), ladite poignée (55) est agencée entre ladite extrémité proximale (42) et ladite extrémité libre (43), ladite poignée (55) étant indépendante du manche (41) pour qu'une rotation du manche (41) autour de son axe de rotation (AX2) n'induise pas un déplacement de la poignée (55) le long du manche (41).

7. Aéronef (1) muni d'au moins un système moteur (10) exerçant une poussée, ladite poussée étant réglée par au moins un actionneur de commande (14), ledit actionneur de commande (14) étant piloté par une chaîne de transmission d'un mouvement (20) débouchant sur ledit actionneur de commande (14),
**caractérisé en ce que** ledit aéronef (1) comporte au moins un organe de commande (40) selon l'une quelconque des revendications 1 à 6, ledit organe de commande (40) étant relié mécaniquement à la chaîne de transmission d'un mouvement (20) et étant destiné à déplacer ladite chaîne de transmission d'un mouvement (20).

8. Aéronef selon la revendication 7,
**caractérisé en ce que** ladite chaîne de transmission d'un mouvement (20) comporte au moins un actionneur de pilotage (17), ledit actionneur de pilotage (17) étant piloté par une interface de commande (18) avionique manoeuvrable par un pilote.

9. Aéronef selon l'une quelconque des revendications 7 à 8,
**caractérisé en ce que** ledit aéronef (1) comprenant deux systèmes moteur (10) à hélices (11, 12), la poussée exercée par chaque hélice (11, 12) d'un système moteur étant pilotée en modifiant un pas de pales (13) de cette hélice, ledit aéronef (1) comporte un système de commande (16) manoeuvrable par un pilote pour modifier les poussées exercées par les deux hélices de manière différente, ledit organe de commande (40) permettant de modifier les poussées exercées par les deux hélices de la même manière, ladite chaîne de transmission d'un mouvement (20) comporte au moins un combinateur (22) relié à l'organe de commande (40) et au système de commande (16) ainsi qu'aux deux hélices (11, 12), ledit combinateur (22) combinant mécaniquement un déplacement généré par ledit organe de commande (40) et un déplacement généré par ledit système de commande (16).

10. Aéronef selon l'une quelconque des revendications 7 à 9,
**caractérisé en ce que** ledit organe de commande (40) comprenant une transmission mécanique de mouvement (36) fixée à l'ensemble mobile (50), un levier (31) est articulé d'une part à la transmission mécanique de mouvement (36) et d'autre part à la ladite chaîne de transmission d'un mouvement (20), ledit levier (31) étant mobile en rotation autour d'un axe d'articulation (AX1).

11. Aéronef selon la revendication 10,
**caractérisé en ce que** ledit aéronef (1) comportant plusieurs organes de commande (40) qui comprennent chacun une transmission mécanique de mouvement (36) reliée à l'ensemble mobile (50) de l'organe de commande associé, chaque transmission mécanique de mouvement (36) est articulée au levier (31).

12. Aéronef selon l'une quelconque des revendications 10 à 11,
**caractérisé en ce que** ledit axe d'articulation (AX1) s'étendant entre deux zones extrémales (32, 33) du levier (31), la transmission mécanique de mouvement (36) et la chaîne de transmission d'un mouvement (20) sont articulées au levier (31) entre ledit axe d'articulation (AX1) et la même zone extrémale (33).

13. Aéronef selon l'une quelconque des revendications 10 à 12,
**caractérisé en ce que** ledit aéronef (1) comporte un système d'immobilisation (37) manoeuvrable par un pilote pour immobiliser ledit levier (31) en fonctionnement normal.

14. Aéronef selon la revendication 13
**caractérisé en ce que** ledit système d'immobilisation (37) est muni d'un système mécanique qui comprend un doigt de blocage (38) mobile en translation et un orifice (39) du levier (31), ledit doigt de blocage (38) étant engagé dans ledit orifice (39) pour interdire une rotation du levier (31) en fonctionnement normal et étant désengagé dudit orifice (39) pour autoriser une rotation du levier (31) en fonctionnement manuel.

15. Procédé pour commander un système moteur (10) d'un aéronef (1) selon l'une quelconque des revendications 7 à 14,
**caractérisé en ce qu'**on tourne la poignée (55) selon un premier sens de rotation (103) pour la faire translater le long du manche (41) selon le premier sens de translation (101) afin d'augmenter la poussée exercée par le système moteur (10), et on tourne la poignée (55) selon un deuxième sens de rotation (104) pour la faire translater le long du manche selon le deuxième sens de translation (102) afin de réduire la poussée exercée par le système moteur (10).

16. Procédé selon la revendication 15,
**caractérisé en ce que** ledit aéronef (1) ayant un indicateur (80) présentant une échelle (81) illustrant des valeurs de poussée et une aiguille (83) pointant sur cette échelle une valeur d'une poussée courante, ladite aiguille (83) effectuant une rotation selon un premier sens de déplacement (105) lorsque la poussée augmente et selon un deuxième sens de déplacement (106) lorsque la poussée diminue, ledit premier sens de rotation (103) est identique audit premier sens de déplacement (105), ledit deuxième sens de rotation (104) est identique audit deuxième sens de déplacement (106).

## Patentansprüche

1. Von einem Piloten betätigbares Steuerorgan (40), wobei das Steuerorgan (40) vorgesehen ist, um ein Antriebssystem (10) zu steuern, das in einem Luftfahrzeug (1) einen Schub ausübt, wobei das Steuerorgan (40) einen Stiel (41) und eine bewegliche Anordnung (50) umfasst, die bewegliche Anordnung (50) auf dem Stiel (41) angeordnet ist und in Bezug auf diesen Stiel (41) beweglich ist, und die bewegliche Anordnung (50) einen Griff (55) umfasst,
**dadurch gekennzeichnet, dass** der Griff (55) mit dem Stiel (41) durch eine Schraubenverbindung (57) verbunden ist, so dass eine Drehung des Griffs (55) um den Stiel (41) eine Translation des Griffs (55) und der beweglichen Anordnung (50) entlang des Stiels (41) bewirkt, der Griff (55) in einer besagten Translation in einer ersten Translationsrichtung (101) beweglich ist, und der Griff (55) in einer besagten Translation in einer zweiten Translationsrichtung (102) entgegengesetzt zu der ersten Translationsrichtung (101) beweglich ist.

2. Steuerorgan nach Anspruch 1,
**dadurch gekennzeichnet, dass** das Steuerorgan (40) eine mechanische Bewegungsübertragung (36) aufweist, wobei die mechanische Bewegungsübertragung mindestens eine bewegliche Verbindung umfasst, die mechanisch an der beweglichen Anordnung (50) befestigt ist.

3. Steuerorgan nach Anspruch 2,
**dadurch gekennzeichnet, dass** die bewegliche Anordnung (50) eine Basis (60) umfasst, die mit dem Griff (55) zusammenwirkt, wobei der Griff (55) mit der Basis (60) durch eine Schwenkverbindung (62) verbunden ist, die dem Griff (55) einen Rotationsfreiheitsgrad in Bezug auf die Basis (60) und um den Stiel herum gibt, wobei die Basis (60) am Stiel (41) durch eine Gleitschienenverbindung (65) befestigt ist, wobei die Basis (60) nur in Bezug auf den Stiel (41) translatorisch beweglich ist, wobei der Griff (55) in Bezug auf die Basis (60) drehbar beweglich und in Translation mit der Basis (60) fest verbunden ist, und wobei die mechanische Bewegungsübertragung (36) an der Basis (60) befestigt ist.

4. Steuerorgan nach einem der Ansprüche 1 bis 3,
**dadurch gekennzeichnet, dass** die bewegliche Anordnung (50) ein Steuerstellglied (14) steuert, das eine Verschiebung der beweglichen Anordnung (50) über eine Steueramplitude erfordert, um einen gesamten Betriebsbereich des Steuerstellglieds (14) abzudecken, wobei sich die bewegliche Anordnung (50) außer Betrieb in einer zentrierten Position (POSO) zwischen einem ersten Anschlag (201) und einem zweiten Anschlag (202) befindet, und dass der erste Anschlag (201) und der zweite Anschlag (202) von der beweglichen Anordnung (50) aus der zentrierten Position (POSO) heraus nach einer der Steueramplitude entsprechenden Translationsbewegung der beweglichen Anordnung erreicht werden.

5. Steuerorgan nach einem der Ansprüche 1 bis 4,
**dadurch gekennzeichnet, dass** sich der Stiel (41) in Längsrichtung von einem proximalen Ende (42) zu einem freien Ende (43) erstreckt, wobei das proximale Ende (42) mit einem Gelenk (70) versehen ist, das dem Stiel einen Rotationsfreiheitsgrad um eine Drehachse (AX2) verleiht, und die erste Bewegungsrichtung (101) von dem proximalen Ende (42) zu dem freien Ende (43) verläuft.

6. Steuerorgan nach einem der Ansprüche 1 bis 5,
**dadurch gekennzeichnet, dass** sich der Stiel (41) in Längsrichtung von einem proximalen Ende (42) zu einem freien Ende (43) erstreckt, wobei das proximale Ende (42) mit einem Gelenk versehen ist, das dem Stiel einen Rotationsfreiheitsgrad um eine Drehachse (AX2) verleiht, dass der Griff (55) zwischen dem proximalen Ende (42) und dem freien Ende (43) angeordnet ist, und der Griff (55) unabhängig vom Stiel (41) ist, so dass eine Drehung des Stiels (41) um seine Drehachse (AX2) keine Verschiebung des Griffs (55) entlang des Stiels (41) induziert.

7. Luftfahrzeug (1), das mit mindestens einem einen Schub ausübenden Antriebssystem (10) ausgestattet ist, wobei der Schub durch mindestens ein Steuerstellglied (14) geregelt ist, und das Steuerungsstellglied (14) durch eine Bewegungsübertragungskette (20) gesteuert ist, die zu dem Steuerstellglied (14) führt,
**dadurch gekennzeichnet, dass** das Luftfahrzeug (1) mindestens ein Steuerorgan (40) nach einem der Ansprüche 1 bis 6 aufweist, das Steuerorgan (40) mechanisch mit der Bewegungsübertragungskette (20) verbunden ist und vorgesehen ist, um die Bewegungsübertragungskette (20) zu bewegen.

8. Luftfahrzeug nach Anspruch 7,
**dadurch gekennzeichnet, dass** die Bewegungsübertragungskette (20) mindestens ein Steuerungsstellglied (17) umfasst, wobei das Steuerungsstellglied (17) über eine von einem Piloten bedienbare Avionik-Steuerschnittstelle (18) gesteuert ist.

9. Luftfahrzeug nach einem der Ansprüche 7 bis 8,
**dadurch gekennzeichnet, dass** das Luftfahrzeug (1) zwei Antriebssysteme (10) mit Propellern (11, 12) umfasst, wobei der von jedem Propeller (11, 12) eines Antriebssystems ausgeübte Schub durch Modifizieren einer Blattneigung (13) dieses Propellers gesteuert wird, wobei das Luftfahrzeug (1) ein von einem Piloten betätigbares Steuersystem (16) aufweist, um die von den beiden Propellern ausgeübten Schübe auf unterschiedliche Weise zu modifizieren, wobei das Steuerorgan (40) es ermöglicht, die von den beiden Propellern ausgeübten Schübe auf die gleiche Weise zu modifizieren, die Bewegungsübertragungskette (20) mindestens einen Kombinator (22) umfasst, der mit dem Steuerorgan (40) und dem Steuersystem (16) sowie mit den beiden Propellern (11, 12) verbunden ist, und der Kombinator (22) eine von dem Steuerorgan (40) erzeugte Verschiebung und eine von dem Steuersystem (16) erzeugte Verschiebung mechanisch kombiniert.

10. Luftfahrzeug nach einem der Ansprüche 7 bis 9,
**dadurch gekennzeichnet, dass** das Steuerorgan (40) eine mechanische Bewegungsübertragung (36) umfasst, die an der beweglichen Anordnung (50) befestigt ist, ein Hebel (31) einerseits an der mechanischen Bewegungsübertragung (36) und andererseits an der Bewegungsübertragungskette (20) angelenkt ist, und der Hebel (31) um eine Scharnierachse (AX1) drehbar beweglich ist.

11. Luftfahrzeug nach Anspruch 10,
**dadurch gekennzeichnet, dass** das Luftfahrzeug (1) eine Mehrzahl von Steuerorganen (40) aufweist, die jeweils eine mechanische Bewegungsübertragung (36) umfassen, die mit der beweglichen Anordnung (50) des zugehörigen Steuerorgans verbunden ist, und dass jede mechanische Bewegungsübertragung (36) an den Hebel (31) angelenkt ist.

12. Luftfahrzeug nach einem der Ansprüche 10 bis 11,
**dadurch gekennzeichnet, dass** sich die Scharnierachse (AX1) zwischen zwei Endzonen (32, 33) des Hebels (31) erstreckt, und dass die mechanische Bewegungsübertragung (36) und die Bewegungsübertragungskette (20) an den Hebel (31) zwischen der Gelenkachse (AX1) und der gleichen Endzone (33) angelenkt sind.

13. Luftfahrzeug nach einem der Ansprüche 10 bis 12,
**dadurch gekennzeichnet, dass** das Luftfahrzeug (1) ein von einem Piloten betätigbares Immobilisierungssystem (37) aufweist, um den Hebel (31) im Normalbetrieb zu immobilisieren.

14. Luftfahrzeug nach Anspruch 13,
**dadurch gekennzeichnet, dass** das Immobilisierungssystem (37) mit einem mechanischen System versehen ist, das einen translatierbaren Sperrfinger (38) und eine Öffnung (39) des Hebels (31) beinhaltet, wobei der Sperrfinger (38) im Normalbetrieb in die Öffnung (39) eingreift, um eine Drehung des Hebels (31) zu verhindern, und im Handbetrieb von der Öffnung (39) gelöst ist, um eine Drehung des Hebels (31) zu ermöglichen.

15. Verfahren zum Steuern eines Antriebssystems (10) eines Flugzeugs (1) nach einem der Ansprüche 7 bis 14,
**dadurch gekennzeichnet, dass** der Griff (55) in einer ersten Drehrichtung (103) gedreht wird, um ihn entlang des Griffs (41) in der ersten Translationsrichtung (101) zu translatieren, um den durch das Antriebssystem (10) ausgeübten Schub zu erhöhen, und der Griff (55) in eine zweite Drehrichtung (104) gedreht wird, um ihn entlang des Griffs in die zweite Translationsrichtung (102) zu bewegen, um den durch das Antriebssystem (10) ausgeübten Schub zu verringern.

16. Verfahren nach Anspruch 15,
**dadurch gekennzeichnet, dass** das Luftfahrzeug (1) einen Indikator (80) mit einer Skala (81), die Schubwerte darstellt, und einem Zeiger (83) aufweist, der auf dieser Skala einen Wert eines aktuellen Schubs anzeigt, wobei die Nadel (83) bei zunehmendem Schub eine Drehung in einer ersten Bewegungsrichtung (105) und bei abnehmendem Schub in einer zweiten Bewegungsrichtung (106) ausführt, wobei die erste Drehrichtung (103) identisch mit der ersten Bewegungsrichtung (105) ist, und die zweite Drehrichtung (104) identisch mit der zweiten Bewegungsrichtung (106) ist.

## Claims

1. Control member (40) that can be operated by a pilot, the control member (40) being intended for controlling an engine system (10) that exerts thrust in an aircraft (1), the control member (40) comprising a shaft (41) and a movable assembly (50), the movable assembly (50) being arranged on the shaft (41) and being movable relative to said shaft (41), the movable assembly (50) comprising a grip (55),
**characterised in that** the grip (55) is connected to the shaft (41) by means of a helical connection (57) such that rotating the grip (55) about the shaft (41) causes the grip (55) and the movable assembly (50) to move translationally along the shaft (41), the grip (55) being translationally movable in a first translational direction (101), and the grip (55) being translationally movable in a second translational direction (102) counter to the first translational direction (101).

2. Control member according to claim 1, **characterised in that** the control member (40) comprises a mechanical movement transmission (36), the mechanical movement transmission comprising at least one movable connection that is mechanically fastened to the movable assembly (50).

3. Control member according to claim 2, **characterised in that** the movable assembly (50) comprises a base (60) that interacts with the grip (55), the grip (55) being hinged to the base (60) via a pivot connection (62) that allows the grip (55) a degree of freedom to rotate relative to the base (60) and about the shaft, the base (60) being mounted on the shaft (41) by means of a sliding connection (65), the base (60) only being translationally movable relative to the shaft (41), the grip (55) being rotatable relative to the base (60) and being rigidly connected to the base (60) so as to move translationally therewith, the mechanical movement transmission (36) being fastened to the base (60).

4. Control member according to any of claims 1 to 3, **characterised in that**, the movable assembly (50) controlling a control actuator (14) that requires the movable assembly (50) to move over a control amplitude in order to cover an entire operating range of the control actuator (14), the movable assembly (50) is in a centred position (POSO) between a first abutment (201) and a second abutment (202) when not in operation, the first abutment (201) and the second abutment (202) being reached by the movable assembly (50) from the centred position (POSO) as a result of the movable assembly moving translationally along the control amplitude.

5. Control member according to any of claims 1 to 4, **characterised in that**, the shaft (41) extending longitudinally from a proximal end (42) to a free end (43), the proximal end (42) being provided with a hinge (70) that allows the shaft a degree of freedom to rotate about an axis of rotation (AX2), the first translational direction (101) goes from the proximal end (42) towards the free end (43).

6. Control member according to any of claims 1 to 5, **characterised in that**, the shaft (41) extending longitudinally from a proximal end (42) to a free end (43), the proximal end (42) being provided with a hinge that allows the shaft a degree of freedom to rotate about an axis of rotation (AX2), the grip (55) is arranged between the proximal end (42) and the free end (43), the grip (55) being independent of the shaft (41) such that rotating the shaft (41) about its axis of rotation (AX2) does not cause the grip (55) to move along the shaft (41).

7. Aircraft (1) provided with at least one engine system (10) that exerts thrust, the thrust being adjusted by means of at least one control actuator (14), the control actuator (14) being controlled by a movement transmission chain (20) terminating at the control actuator (14), **characterised in that** the aircraft (1) comprises at least one control member (40) according to any of claims 1 to 6, the control member (40) being mechanically connected to the movement transmission chain (20) and being intended to move the movement transmission chain (20).

8. Aircraft according to claim 7, **characterised in that** the movement transmission chain (20) comprises at least one piloting actuator (17), the piloting actuator (17) being controlled by an avionic control interface (18) that can be operated by a pilot.

9. Aircraft according to either claim 7 or claim 8, **characterised in that**, the aircraft (1) comprising two engine systems (10) having propellers (11, 12), the thrust exerted by each propeller (11, 12) of an engine system being controlled by modifying a pitch of the blades (13) of said propeller, the aircraft (1) comprises a control system (16) that can be operated by a pilot to modify the thrusts exerted by the two propellers in different manners, the control member (40) allowing the thrusts exerted by the two propellers to be modified in the same manner, the movement transmission chain (20) comprising at least one mixing unit (22) connected to the control member (40) and to the control system (16) and also to the two propellers (11, 12), the mixing unit (22) mechanically combining a movement generated by the control member (40) and a movement generated by the control system (16).

10. Aircraft according to any of claims 7 to 9, **characterised in that**, the control member (40) comprising a mechanical movement transmission (36) fastened to the movable assembly (50), a lever (31) is hinged both to the mechanical movement transmission (36) and to the movement transmission chain (20), the lever (31) being rotatable about a hinge axis (AX1).

11. Aircraft according to claim 10, **characterised in that**, the aircraft (1) comprising a plurality of control members (40) each having a mechanical movement transmission (36) connected to the movable assembly (50) of the associated control member, each mechanical movement transmission (36) is hinged to the lever (31).

12. Aircraft according to either claim 10 or claim 11, **characterised in that**, the hinge axis (AX1) extending between two end zones (32, 33) of the lever (31), the mechanical movement transmission (36) and the movement transmission chain (20) are hinged to the lever (31) between the hinge axis (AX1) and the same end zone (33).

13. Aircraft according to any of claims 10 to 12, **characterised in that** the aircraft (1) comprises a locking system (37) that can be operated by a pilot to lock the lever (31) in normal operation.

14. Aircraft according to claim 13, **characterised in that** the locking system (37) is provided with a mechanical system comprising a translationally movable blocking finger (38) and an opening (39) in the lever (31), the blocking finger (38) being engaged in the opening (39) in order to prevent the lever (31) from rotating in normal operation, and being disengaged from the opening (39) in order to allow the lever (31) to rotate in manual operation.

15. Method for controlling an engine system (10) of an aircraft (1) according to any of claims 7 to 14, **characterised in that** the grip (55) is turned in a first direction of rotation (103) to make it move translationally along the shaft (41) in the first translational direction (101) in order to increase the thrust exerted by the engine system (10), and the grip (55) is turned in a second direction of rotation (104) to make it move translationally along the shaft in the second translational direction (102) in order to reduce the thrust exerted by the engine system (10).

16. Method according to claim 15, **characterised in that**, the aircraft (1) comprising an indicator (80) having a scale (81) that displays thrust values, and a needle (83) that points to a current thrust value on the scale, the needle (83) rotating in a first direction of movement (105) when the thrust increases and in a second direction of movement (106) when the thrust decreases, the first direction of rotation (103) is identical to the first direction of movement (105), and the second direction of rotation (104) is identical to the second direction of movement (106).
